# EUROPEAN PATENT APPLICATION

(11) **EP 2 541 184 A1**
(43) Date of publication of application: **02.01.2013**
(21) Application number: 12173363.8
(22) Date of filing: 25.06.2012
(51) Int. Cl.: F28F 9/02, C08L 83/04

(54) **Gasket material for heat exchanger, and heat exchanger using the same**

(30) Priority: 27.06.2011 JP 2011141627; 23.03.2012 JP 2012067403
(71) Applicant: Denso Corporation, Kariya-city, Aichi 448-8661 (JP)
(72) Inventor: Okamoto, Shinichi, Kariya-city, Aichi-pref., 448-8661 (JP); Iida, Arata, Kariya-city, Aichi-pref., 448-8661 (JP); Hakamata, Osamu, Kariya-city, Aichi-pref., 448-8661 (JP)
(74) Representative: Klingseisen, Franz

(57) **Abstract**

A liquid silicone resin composition as a gasket material comprising a base resin (14), a first crosslinking agent (15) for causing a crosslinking reaction of the base resin (14), a silane coupling agent (12), a second crosslinking agent (17) for forming a bond to the silane coupling agent (12), and a silica filler (13) is used to form a gasket (126) in a heat exchanger tank body (125) made of resin.

## Description

### BACKGROUND OF THE INVENTION

### 1. Field of the Invention

The present invention relates to a gasket material for a heat exchanger, and a heat exchanger using the same.

### 2. Description of the Related Art

A heat exchanger, such as a radiator, comprises a plurality of tubes and a header tank communicating with the tubes. The header tank is constructed by connecting a tank body made of a resin, such as polyamide 66 (PA66), to a metal core plate. To ensure sealing between the tank body and the core plate, a gasket, also known as packing, as a sealing means is applied to therebetween. The gasket is made of a silicone resin composition, and is formed by injection-molding the composition into a mold thereby forming a sealed gasket, (see, for example, Japanese Unexamined Patent Publication (Kokai) Nos. 7-24870 and 7-24871). In the heat exchangers described in these patent publications, a composition containing a base resin, a crosslinking agent, a silane coupling agent as an adhesion aid, and a silica filler is used as a silicone resin composition for the gasket.

### SUMMARY OF THE INVENTION

In the prior art heat exchangers, when the tank body is made of a resin to which a silicone resin composition is difficult to be adhered, such as polyamide 610 (PA610), there is a problem that sufficient adhesive force is not exerted between the resin of the tank body and the silicone resin composition forming the gasket. Further, when removing the header tank from the mold, the gasket is separated from the tank body due to insufficient adhesive force. Also, there is a problem that the sealing property of the gasket as a sealing means is reduced.

As a measure against these problems, increasing the adhesive force by increasing the amount of the adhesion aid in the silicone resin composition has been considered. However, when the amount of the adhesion aid is actually increased in the silicone resin composition, although the adhesiveness of the gasket to the tank body is enhanced, the sealing property of the gasket is still unimproved and is not sufficient to ensure sealing reliability.

In consideration of these problems, an object of the present invention is to enhance the adhesiveness of the gasket while ensuring the sealing reliability of the gasket compared with conventional gaskets so that even when a resin which is difficult to adhere to a silicon resin composition is used as a constituent material of the tank body, the adhesive force of the gasket to the tank body can be sufficient.

In the present invention, by focusing attention on the fact that the adhesive force and sealing property inherent in a silicone resin composition are not exerted in a conventional gasket formed of a silicone resin composition, the adhesiveness of the gasket is enhanced while ensuring the sealing reliability of the gasket compared with conventional gasket by sufficiently ensure the adhesive force and sealing property inherent in the silicone resin composition in the gasket.

That is, in order to attain the above object, the present invention is a gasket material for a heat exchanger, which is used to form a gasket ensuring sufficient adhesion of a core plate to a specific resin-made tank body of a heat exchanger, wherein the gasket material is a liquid silicone resin composition comprising a base resin as a main agent, a first crosslinking agent for causing a crosslinking reaction of the base resin, a silane coupling agent, a second crosslinking agent for forming a bond to the silane coupling agent, and a silica filler (fist invention). The base resin is used to form a rubbery silicone polymer (silicone rubber) together with the first crosslinking agent. As the base resin, for example, a vinyl group-containing organopolysiloxane can be used.

When the gasket is formed by using this gasket material, even when, for example, a resin to which a silicone resin is difficult to be adhered, such as PA610, is used as a constituent material of the tank body, the adhesive force of the gasket to the tank body can be sufficient and at the same time, the sealing reliability of the gasket can be ensured.

The reason therefor is considered as follows.

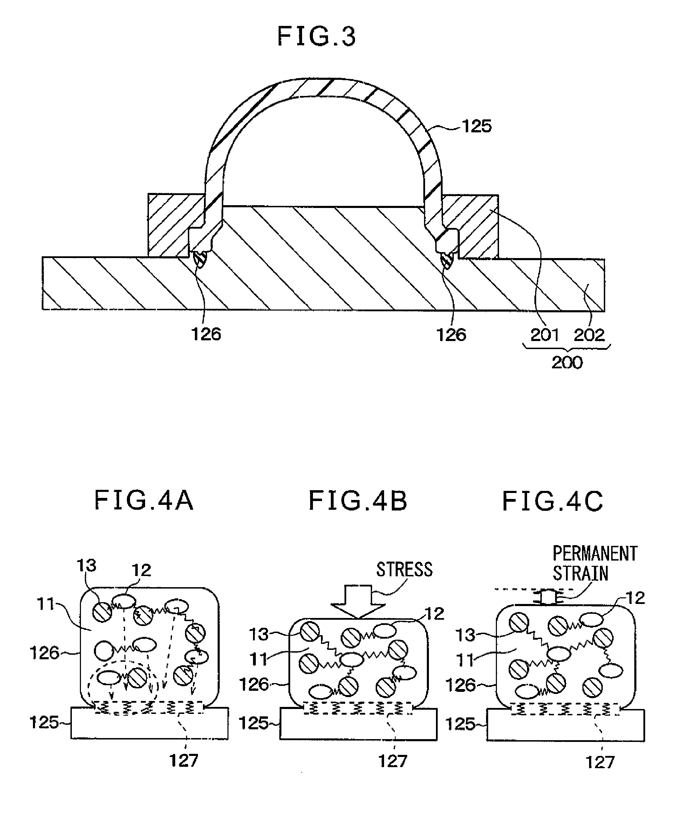

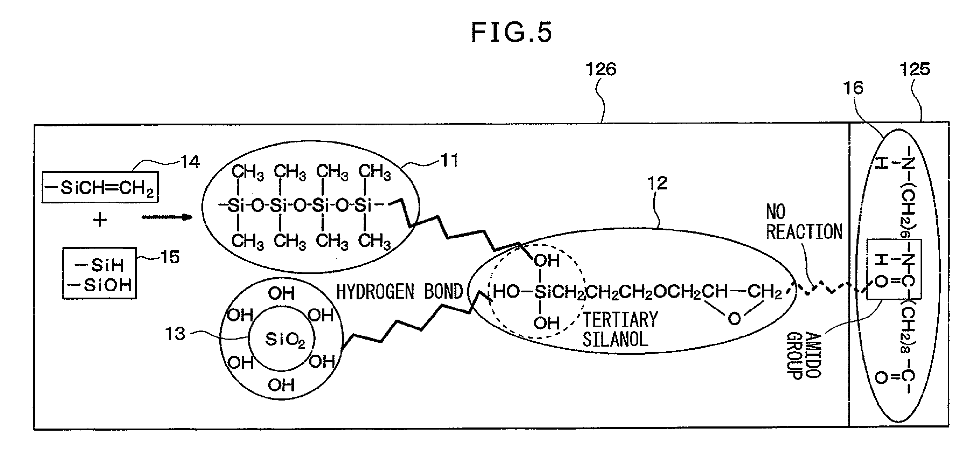

In the prior art heat exchangers, the adhesive force and sealing property inherent in a silicone resin composition cannot be sufficiently exerted due to reaction between a silane coupling agent and a silica filler as components of the silicone resin composition, as is described hereinafter referring to Figs. 4A to 4C and Fig. 5.

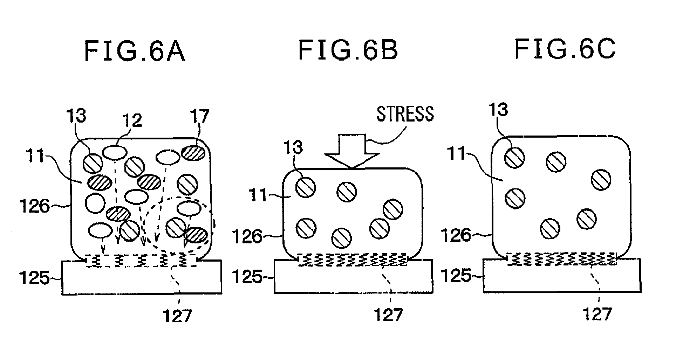

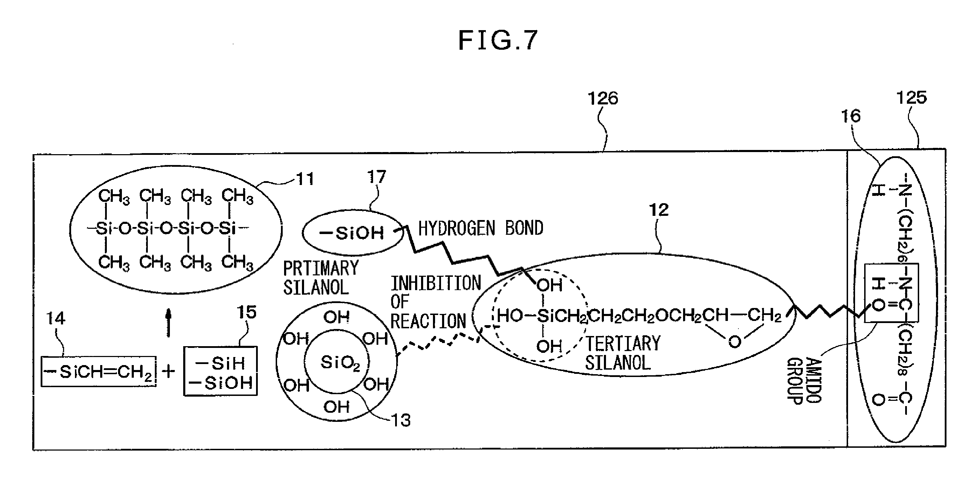

Contrary to this, according to the first invention of this application, since a bond is produced between a silane coupling agent and a second crosslinking agent, the reaction of the silane coupling agent with a silica filler can be inhibited. In turn, the adhesive force and sealing property inherent in a silicone composition can be made sufficient, as is described hereinafter referring to Figs. 6A to 6C and Fig. 7.

In the first invention, specifically, the gasket material is preferably composed of a silicone resin composition containing from 2 to 4.5 parts by weight in total of the first and second crosslinking agents per 100 parts by weight of the base resin (second invention).

Further, in the first and second inventions described above, it is preferred that the silicone resin composition comprises a silica filler in an amount of 20 to 30 parts by weight per 100 parts by weight of the base resin, and the base resin used herein has a weight average molecular weight (Mw) in the range of 90,000 to 150,000 (third invention). According to the third invention, as is described hereinafter, good moldability during the molding of the gasket can be ensured, along with a further improved sealing releability of the gasket.

In addition to the gasket material, the present invention is a heat exchanger comprising a plurality of tubes (111) for allowing a fluid flow therein, and a header tank (120) provided on both longitudinal end sides of the tube (111), the header tank (120) being extended in the direction orthogonal to the longitudinal direction of the tube (111), and being communicated with the plurality of tubes (111), wherein the header tank (120) comprises a core plate (123) having joined thereto the plurality of tubes (111) and a resin-made tank body (125) constituting a tank interior space (124) together with the core plate (123). The tank body (125) and the core plate (123) is connected and sealed with a gasket (126) adhered to the tank body (125) (fourth invention). In this fourth invention, the gasket (126) is formed from the gasket material according to the first to third inventions, mentioned above, as an injection-molding product. The injection-molding product is formed by injecting the gasket material in a site of forming the gasket (126) in a mold. During the injection-molding, at least a part of the tank body (125) to which the gasket (126) is adhered and the site of forming the gasket (126) are housed in the mold.

According to the fourth invention, since a gasket is formed by using the gasket material according to the first to third inventions, as in the first to third inventions, even when a resin which is difficult to adhere to a silicone resin is used as a constituent material of the tank body, the adhesive force of the gasket to the tank body can be made sufficient and at the same time, the sealing reliability of the gasket can be ensured.

Further, in the fourth invention, for example, when the tank body (125) is formed by using a resin such as polyamide, for example, PA 610, the resulting adhesion strength between the gasket (126) and the tank body (125) can be 0.7 MPa or more (five invention)..

In addition to the problems mentioned above, in the prior art heat exchangers, there is a problem that a compressibility of the gasket may be varied depending upon a disagreement between the tank body and the core plate during their assembling, and a variation in the size of the parts such as the tank body. Generally, such a problem will be prevented by using the specific gasket having an excellent sealing releability. Such a sealing releability can be ensured in the heat exchangers which are suffering from a variation in the compressibility of the gasket used, if the compressibility of the gasket is higher than a predetermined level of the compressibility which means that the compressibility of the gasket is sufficient to withstand a pressure generated in an inner portion of the header tank.

However, the inventors of this application have found that the compressibility of the gasket can be gradually lowered, since settling (permanent strain or compression set) is generated in the gasket with passage of time using the gasket, and thus a fluid in the inner portion of the tank can be leaked out through a gap formed upon the compression of the gasket, if a compressibility of the gasket is lowered to a level which is below the predetermined level mentioned above.. Accordingly, when a portion showing a reduced initial compressibility is contained in the gasket, an early reduction of the sealing releability will be caused in such a portion of the gasket, since the compressibility of the gasket can be shortly lowered to a level below the predetermined level capable of withstanding the predetermined inner pressure, mentioned above, of the tank.

Accordingly, the inventors of this application have found that an improvement of the permanent strain property of the gasket will be effective as one means for solving the problem on the early reduction of the sealing releability. The sealing releability of the gasket will be improved as a result of the improvement of the compression permanent strain property of the gasket and thus the extension of the time which is required to reach a level of the compressibility at which the gasket cannot withstand the predetermined inner pressure of the tank due to its lowered compressibility, even if at least a portion of the gasket has a lowered compressibility due to the varied compressibility of the gasket.

Therefore, the sixth invention of this application has an object of improving a sealing releability of the gasket in comparison with that of the prior art gaskets.

That is, in order to attain the above object, there is provided a gasket material for use in the formation of a gasket in a heat exchanger, the gasket being adhered to a resin-made tank of the heat exchanger, wherein the gasket material is composed of a liquid silicone resin composition comprising a base resin having a weight average molecular weight. (Mw) in the range of 90,000 to 150,000, a crosslinking agent for causing a crosslinking reaction of the base resin, a silane coupling agent, and a silica filler, and the silicone resin composition comprises from 25 to 30 parts by weight of the silica filler per 100 parts by weight of the base resin (sixth invention).

According to the sixth invention, a content of the silica filler in the silicone resin composition was reduced in comparison with the content of the silica filler conventionally applied in the prior art silicon resin compositions. Since a content of the base resin in the same composition is relatively increased as a function of the reduction of the content of the silica filler, a permanent strain property and thus a sealing releability of the gasket member could be improved.

Further, according to the sixth invention, a good moldability could be ensured as a result of using a base resin having a higher molecular weight (Mw) such as 90,000 to 150,000. Using such a higher molecular weight base resin, it is possible to inhibit a formation of the defective articles during the molding of the gasket. This is notable, because when a content of the silica filler in the silicone resin composition is reduced, there arises a tendency of being produced defective gaskets as a molded article during the molding process.

In addition to the gasket material described above with regard to the sixth invention, there is provided a heat exchanger comprising a resin-made tank body (125) having adhered thereto a gasket (126) formed from the gasket material according to the sixth invention (seventh invention).

According to the seventh invention, as in the sixth invention described above, a sealing releability of the gasket can be improved as a result of an improvement of the compression permanent strain property of the gasket, since the gasket is that formed using the gasket material according to the sixth invention.

Note that reference symbols in the parentheses of respective means described above and in the appended claims correspond to reference symbols of a series of specific means illustrated in the description of embodiments which will be described hereinafter.

### BRIEF DESCRIPTION OF THE DRAWINGS

Fig.. 1 is a front view of the radiator according to one embodiment of the present invention,
Fig. 2 is a cross-sectional view along line II-II of Fig. 1,
Fig. 3 is a cross-sectional view illustrating how the injection molding of the gasket shown in Fig. 2 is performed,
Figs.. 4A, 4B and 4C are schematic views illustrating the chemical structure of a conventional gasket at the molding, compression and relieving, respectively,
Fig. 5 is a schematic view of the region bounded by the dashed line in Fig. 4A,
Figs. 6A, 6B and 6C are schematic views illustrating the chemical structure of the gasket according to the present invention at the molding, compression and relieving, respectively,
Fig. 7 is a schematic view of the region bounded by the dashed line in Fig. 6A,
Fig. 8 is a schematic view of the jig used for the sealing property evaluation test, and
Figs. 9A, 9B and 9C are schematic views illustrating in sequence the method employed for the adhesiveness evaluation test.

### DESCRIPTION OF PREFERRED EMBODIMENT

### (First Embodiment of the Invention)

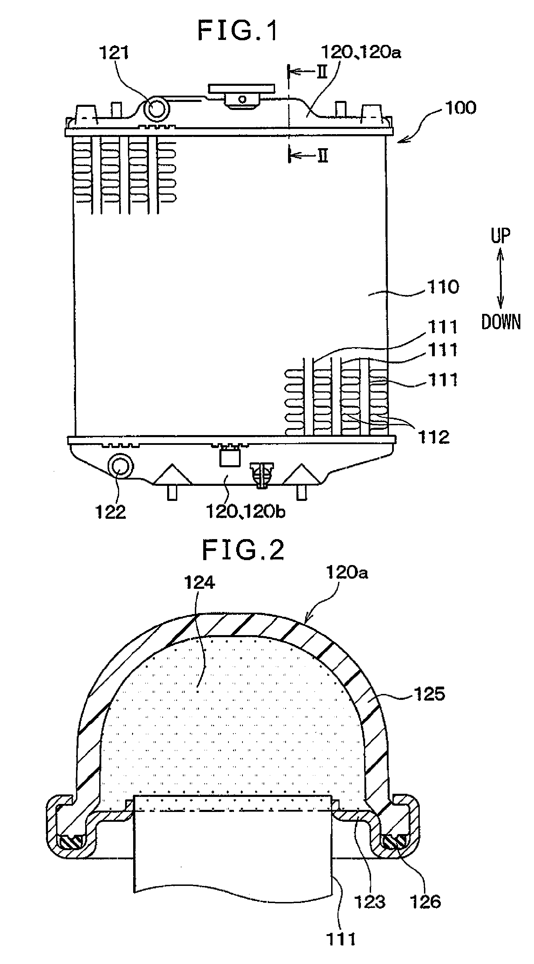

Fig. 1 shows a front view of the radiator according to one embodiment of the present invention, and Fig.. 2 shows a cross-sectional view along line II-II of Fig. 1. In this embodiment, a heat exchanger according to the present invention is applied to a radiator which dissipates the heat of a cooling fluid used to cool a heating element such as vehicle driving engine.

The radiator (heat exchanger) 100 of this embodiment exchanges the heat between cooling water as a cooling fluid and air. As shown in Fig.. 1, the radiator comprises a plurality of tubes 111 for allowing water flow therein, and a header tank 120 provided on both longitudinal end sides of the tube 111. The header tank 120 is extended in the direction orthogonal to the longitudinal direction of the tube 111, and is communicated with the plurality of tubes 111.

The plurality of tubes 111 are disposed in parallel to align the longitudinal direction with the vertical direction. Also, a thin strip-like fin 112 formed in a corrugated manner is provided between the plurality of tubes 111, and the fin 112 and the tube 111 are joined together. The fin 112 and the tube 111 are, for example, made of a metal such as aluminum and joined together by brazing. The core part 110 for exchanging the heat between cooling water and air is constituted from the fin 112 and the tube 111.

The header tank 120 consists of a first header tank 120a disposed on the top end side of the tube 111 and a second header tank 120b disposed on the bottom end side of the tube 111, and the first header tank 120a and the second header tank 120b have a shape extending in the horizontal direction.

In the first header thank 120a, an inlet part 121 for allowing cooling water flow in therefrom is provided, and in the second header tank 120b, an outlet part 122 for allowing the cooling water flow out therethrough is provided. The high-temperature cooling waster flowed out of the engine flows into a first header tank 120a through the inlet part 121 and distributed to each tube 111. Low-temperature cooling waters after the completion of heat exchange are caused to gather in the second header tank 120b and returned to the engine side through the outlet part 122.

The first header tank 120a has a configuration where, as shown in Fig. 2, a core plate 123 joined with a plurality of tubes 111 (one tube is shown in Fig. 2) and a tank body 125 constituting a tank interior space 124 together with the core plate 123 are connected.

The tank body 125 is a resin-made tank body. The tank body 125 is formed from a resin which is more difficult to adhere to a silicone resin composition than polyamide 66 (PA66). Such a resin is, for example, polyamide 610 (PA610). Polyamide 610 is a resin called poly(hexamethylene sebacamide).. Further, the core plate 123 is made of a metal such as aluminum. Furthermore, the connection part between the tank body 125 and the core plate 123 is sealed with a gasket 126 adhered to the tank body 125.

The gasket 126 is an injection-molding product formed from the gasket material which will be described hereinafter. Fig. 3 shows how this injection molding is performed. Specifically, the injection molding is performed in such a manner that, as shown in Fig.. 3, the portion of the tank body 125 to which the gasket 126 is adhered is housed in an inside of a metal mold 200 by sandwiching the tank body 125 at its both end parts between an upper mold 201 and a lower mold 202 of the metal mold 200. The injection molding conditions applied include, for example, the following conditions.
Temperature of metal mold: 180°C (preset), 165°C (actual)
Resin temperature: 20°C
Temperature of tank body: 120°C
Primary pressure: 105 bar for 2 seconds
Secondary pressure: 10 bar for 1 second
Curing time: 20 seconds

After the injection molding, the upper mold 201 is removed to obtain the tank body 125. In the tank body 125, a gasket 126 is successfully adhered to the tank body 125. In this step, when the gasket material of the present invention is used, the tank body 125 and the gasket 126 can be removed from the metal mold 200 without causing separation of the gasket 126 from the tank body 125.

The gasket material used in this injection molding is described below.

The gasket material for a heat exchanger used herein is a liquid silicone resin composition comprising a base resin, a first crosslinking agent for causing a crosslinking reaction of the base resin, a silane coupling agent, a second crosslinking agent for forming a bond to the silane coupling agent, and a silica filler.

The base resin and the first crosslinking agent are used to form a rubbery silicone polymer (silicone rubber). Examples of useful base resin include a vinyl group-containing organopolysiloxane, and examples of useful first crosslinking agent include organohydrogensiloxane.

The silane coupling agent is used as an adhesion aid. As the silane coupling agent, a compound having at least one functional group, preferably two or more functional groups can be used. The functional group is selected from the group consisting of an epoxy group, a (meth)acryloxy group, an alkoxysilyl group, a hydrosilyl group, an ester group and a carbonyl group.

The second crosslinking agent is a compound which can be used alone as a crosslinking agent for the base resin. However, in the presence of the first crosslinking agent, the second crosslinking agent can form a bond to the silane coupling agent. In other words, the second crosslinking agent is added as one component of the silicone resin composition, but since the second crosslinking agent does not cause a crosslinking reaction with the base resin, it is used as a surplus component..

The second crosslinking agent has, as described later, a primary silanol for forming a bond to the silane coupling agent. The second crosslinking agent may be the same or different from the first crosslinking agent. When the same compound as the first crosslinking agent is used as the second crosslinking agent, since the silicone resin composition of the present invention can be prepared only by increasing the amount of the crosslinking agent blended in the conventional silicone resin composition, the gasket material and thus gasket is easily produced or available.

The silica filler is an inorganic filler. If desired, in addition to the silica filler, any one or more fillers other than the silica filler may be incorporated into the silicone resin composition. Also, a curing catalyst or the like for accelerating the crosslinking reaction may be contained in the silicone resin composition.

In the preparation of the silicone resin composition, the amount of each of the above-described components to be blended is determined such that a silicone polymer is formed by the reaction between the base resin and the first crosslinking agent, and the second crosslinking agent reacts with the silane coupling agent. That is, the amount of the first crosslinking agent used is an amount necessary to cause a crosslinking reaction with the base resin to thereby form a silicone polymer, and the amount of the second crosslinking agent used is an amount necessary to be bonded to the silane coupling agent while not reacting with the base resin, thereby ensuring sufficient adhesive strength of the gasket to the tank body. As described above, the amounts of the base resin and first and second crosslinking agents used are particularly important in the practice of the present invention, and the amounts of the silane coupling agent and the silica filer used are optionally determined as needed.

Using this gasket material as a gasket in a heat exchanger, as compared with a conventional gasket, the adhesiveness of the gasket 126 can be enhanced while ensuring the sealing reliability of the gasket 126. Also, even when a resin to which a silicone resin is difficult to be adhered is used as the material of the tank body 125, sufficient adhesive force of the gasket 126 to the tank body 125 can be obtained.

The reason therefor is described hereinafter, referring to Figs. 4A to 4C and Fig. 5 schematically showing the chemical structure of a conventional gasket 126, and Figs.. 6A to 6C and Fig. 7 schematically showing the chemical structure of the gasket 126 according to the present invention. Note that Fig. 5 is a schematic view showing the region bounded by the dashed circle in Fig. 4A, and Fig. 7 is a schematic view showing the region bounded by the dashed circle in Fig. 6A.

In the conventional gaskets, the adhesive force and sealing property inherent in the silicone resin composition cannot be sufficiently exerted due to the reaction between a silane coupling agent and a silica filler as components of the silicone resin composition. This is because, although the silane coupling agent 12 as an adhesion aid should be moved to the adhesion part 127 at the interface between the gasket member 126 and the tank body 125 to cause its reaction with the tank body 125 as shown in Fig. 4A, the movement of the silane coupling agent 12 to the adhesion part 127 was disturbed because of the reaction of the silane coupling agent 12 with the silica filler 13 as shown in Fig. 5. As a result, the reaction of the silane coupling agent 12 with a resin component 16 constituting the tank body 125 was inhibited (deactivation of the silane coupling agent 12) and in turn, the adhesion of the gasket 126 to the tank body 125 through the function of the silane coupling agent 12 was inhibited. Note that the reaction of the silane coupling agent 12 with the silica filler 13 is based on hydrogen bonding of a tertiary silanol of the silane coupling agent 12 to an OH group on the silica surface.

Further, as shown in Fig. 5, a silicone polymer 11 is formed through the reaction of the base resin 14 with the first crosslinking agent 15 to thereby combine the silicone polymer 11 with the silane coupling agent 12.

For this reason, when the gasket 126 is subjected to a compression stress as shown in Fig. 4B, followed by being freed from the compression stress as shown in Fig. 4C, settling (permanent strain or compression set) is produced due to the interaction between the silane coupling agent 12 and each of the silicone polymer 11 and the silica filler 13. The sealing property of the gasket 126 is reduced, accordingly.

Contrary to this, when the gasket material according to the present invention is used in the formation of the gasket, as shown in Fig. 7, the first crosslinking agent 15 can react with the base resin 14 to form a silicone polymer 11, but the second crosslinking agent 17 used is maintained in the gasket 126 without reacting with the base resin 14.

In the reaction illustrated in Fig. 7, the intermolecular force with a tertiary silanol of the silane coupling agent 12 was calculated for the OH group on a surface of the silica filler 13 and the primary silanol of the second crosslinking agent 17 to be 1.5 kcal/mol for the silica filler 13 and 2.55 kcal/mol for the second crosslinking agent 17. The analysis software used is "SCIGRESS Basic V2" available from Fujitsu Limited.

As is appreciated from the above, since the second crosslinking 17 has a higher intermolecular force than the silica filler 13 and thus can easily combine with the silane coupling agent 12, the primary silanol of the second crosslinking agent 17 can be hydrogen-bonded with the tertiary silanol of the silane coupling agent 12, thereby inhibiting the reaction of the silane coupling agent 12 with the silica filler 13.

Accordingly, as shown in Fig. 6A, during the injection molding, the silane coupling agent 12 can be moved to the adhesion part 127 of the silane coupling agent 12. As a result, it becomes enable to react the silance coupling agent 12 with the resin component 16 constituting the tank body 125. The adhesive force inherent in the silicone resin composition can be sufficiently exerted, accordingly.

Similarly, since the reaction of the silane coupling agent 12 with the silica filler 13 is inhibited, when the gasket 126 is subjected to a compression stress as shown in Fig. 6B, followed by being freed from the compression stress as shown in Fig.. 6C, generation of settling can be prevented. As a result, the sealing property inherent in the silicone resin composition is sufficiently exerted.

As is appreciated from the above, while a crosslinking agent enough to prevent deactivation of the silane coupling agent 12 is not present in the conventional silicone resin composition, a crosslinking agent enough to prevent deactivation of the silane coupling agent 12 is present in the silicone resin composition as the gasket material according to the present invention and therefore, the adhesive force and sealing property inherent in the silicone resin composition are sufficient.

### (Second Embodiment of the Invention)

The second embodiment is a modification of the first embodiment described above. In this embodiment, the composition of the silicone resin composition used as the gasket material in the first embodiment is modified in such a manner that a content of the silica filler contained is reduced, and the base resin used is replaced with the corresponding base resin having a higher molecular weight. Other factors of the silicone resin composition used in the second embodiment are identical with those of the silicone resin composition used in the first embodiment.

In particular, the gasket material in the second embodiment is a silicone resin composition which comprises a base resin having a molecular weight (Mw) of 70,000 to 150,000, preferably 90,000 to 150,000, and contains a silica filler in an amount of 25 to 30 parts by weight per 100 parts by weight of the base resin, as is described in Examples 5 to 12 which will follow.

According to the second embodiment, since the content of the silica filler in the composition is reduced to a lower level than that of the prior art compositions, i.e., 30 parts by weight or less, the content of the base resin in the composition can be relatively increased. As a result, it is possible to further improve a compression permanent strain of the gasket member in comparison with the prior art gasket members, thereby enabling to further improve their sealing releability, as shown in the following Examples 5 and 6.

In the silicon resin composition, the content of the silica filler contained therein should be not less than 25 parts by weight, since if the content is excessively reduced, a lower content of the silica filler can result in a reduction of the strength of the resulting gasket material which causes a deterioration of the sealing releability and adhesion force of the gasket, as is described in the following Example 6 and Comparative Example 3.

Further, when the content of the silica filler in the composition is reduced to a lower level compared to the prior art compositions, there arises a tendency of molding defects being frequently generated such as a burr during molding of the gasket member due to a reduction of the viscosity of the composition from which the gasket is formed.

Contrary to the above problems, according the second embodiment of the present invention, using as the base resin a silicone polymer having a higher molecular weight (Mw) of not less than 90,000, it becomes possible to inhibit a reduction in the viscosity of the silicone resin composition, thereby enabling to inhibit a formation of burrs during molding of the gasket, along with ensuring a good moldability of the gasket, as is described in the following Examples 5 and 6, and Comparative Examples 4 and 6.

In the silicone resin composition used in the formation of the gasket, the molecular weight (Mw) of the base resin should not be higher than 150,000, since such an excessively increased molecular weight of the base resin can result in an excessively increased viscosity of the composition to thereby cause molding defects such as insufficient filling of the composition into a mold during the molding of the gasket, as is described in the following Examples 7 and 8, and Comparative Examples 5 and 7.

Accordingly, when the gasket material according to the second embodiment is used in the formation of the gasket, it becomes possible to simultaneously enable a good moldability and a further improved sealing releability of the gasket, in addition to the above functions and effects originated from the gasket material according to the first embodiment.

### (Other Embodiments of the Invention)

As in the first embodiment described above, the above second embodiment is characterized in that the content of the crosslinking agent in the silicone resin composition is increased in comparison with that of the prior art silicone resin compositions. However, if desired, the content of the crosslinking agent according to these embodiments may be the same as that of the prior art silicone resin compositions, as is described in the following Examples 5, 6, and 9 to 12..

In this connection, it is noted that sufficient effects comparable to those described in the first and second embodiments could be obtained in these examples in which the content of the crosslinking agent was varied. Accordingly, it is considered that the results obtainable as a result of the reduction in the content of the silica filler and the increase in the molecular weight (Mw) of the silicone polymer as the base resin in the silicone resin composition can be obtained without relying on the content of the crosslinking agent in the composition.

Accordingly, in comparison with the silicone resin composition containing a silica filler in an amount higher than that of the silicone resin composition having the controlled composition described below, good moldability of the gasket can be ensured, along with an improvement of the sealing releability of the gasket, if the silicone polymer having a molecular weight (Mw) of 90,000 to 150,000 as the base resin is used in, and 25 to 30 parts by weight, per 100 parts by weight of the base resin, of the silica filler is added to the silicone resin composition.

It should be noted that the injection molding was performed in each of the above embodiments by housing a part of the tank body in a inside of the metal mold but may be also performed by housing the entire tank body in an inside of the metal mold.

Also, in each of the above embodiments, the present invention is applied to a radiator, but the present invention may be applied to other heat exchangers having a gasket adhered to a resin-made tank.

### EXAMPLES

The present invention will be described hereinafter by referring to examples thereof.

### Examples 1 to 3 and Comparative Examples 1 and 2

Silicone resin compositions having the composition shown in Table 1 below were prepared in Examples 1 to 3 and Comparative Examples 1 and 2. In the following Table 1, a blending ratio of each of the components in the silicone resin composition is based on 100 parts by weight of the base resin.

In the preparation of the silicone resin compositions, a base resin, a crosslinking agent and a curing catalyst used are those which are conventionally used in the art, as is described below. Similarly, a silica filler and a silane coupling agent as an adhesion aid are those which are conventionally used.
Base resin: vinyl group-containing organopolysiloxane having a molecular weight (Mw) of 70,000
Crosslinking agent: organohydrogensiloxane
Curing catalyst: platinum catalyst

Each silicone resin composition was injection-molded in a metal mold 200 under the conditions described above with in such a manner that, as shown in reference to Fig. 3 to form a gasket 126.

After the injection molding, the sealing property evaluation of the obtained gasket 126 and the adhesive force evaluation of each silicone resin composition were performed by the following methods. Further, the evaluation of the moldability of the gasket was carried out by visually observing a presence or absence of a burr formed in the gasket during molding, and a presence or absence of a defective filing of the resin in the mold. The results are summarized in Table 1.

### [Evaluation of Sealing Property]

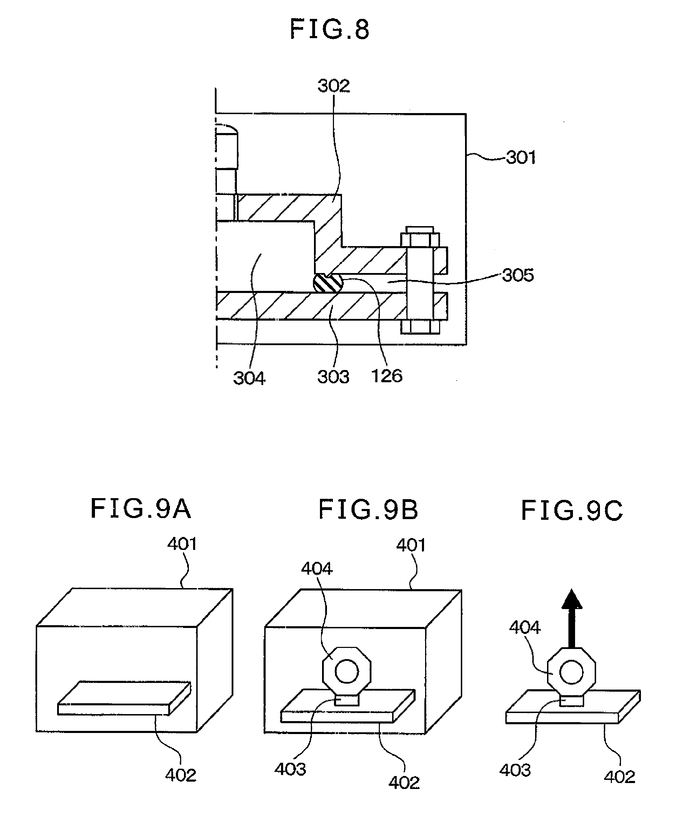

For evaluating the sealing property, a permanent compression set test was performed by using the jig shown in Fig. 8. In an inside of a constant temperature oven 301, the gasket 126 was sandwiched between jigs 302 and 303 to create a state that one side of the gasket 126 was contacted with cooling water 304 inside the jig and another side of the gasket 126 was contacted with air 305. Subsequently, the gasket 126 was compressed and the permanent strain or compression set was measured. The measurement conditions were as follows.
Temperature in constant temperature tank: 100°C
Compressibility of gasket 126: 19%
Internal cooling water: 50% LLC (water:LLC = 50:50)
Compression time: 12,000 hours

Then, the resulting values of the permanent compression set of the gasket measured after the compression time of 12,000 hours each was converted to the corresponding sealing property of the gasket for the tank body made of the "PA610" resin which indicates the sealing property determined when the gasket was applied to the "PA610" resin-made tank body. In this conversion process, reference was made to the known relationship, previously determined through the experiments by the inventors, between the value of the permanent compression set of the gasket and the corresponding sealing property of the gasket for the "PA610" resin-made tank body.

In order to evaluate the sealing property of the gasket, the converted sealing property of the gasket for the "PA610" tank body was compared with the known sealing property of the prior art gasket for the "PA66" tank body which was determined when the prior art gasket was applied to a tank body made of the "PA66" resin. In the comparison process, when the sealing property of the gasket for the "PA610" tank body is equivalent to that for the "PA66" tank body, the sealing property was rated as "good", and when the former is higher than the latter, the sealing property was rated as "excellent". Further, when the sealing property of the gasket for the "PA610" tank body is lower than that for the "PA66" tank body, the sealing property was rated as "bad".

### [Evaluation of Adhesiveness]

For evaluating the adhesiveness, the adhesive strength of the silicone resin composition was measured by the method illustrated sequentially in Figs. 9A, 9B and 9C..

As shown in Fig. 9A, an adherend 402 made of PA610 was preheated at 165°C in an inside of a constant temperature oven 401. After the preheating, as shown in Fig. 9B, the silicone resin composition 403 of each of Examples 1 to 3 and Comparative Examples 1 and 2 was disposed on a surface of the adherend 402, and the silicone resin composition 403 was adhered to the adherend 402 and a nut 404. Then, the silicone resin composition 403 was cured at 165°C for 20 seconds. Thereafter, as shown in Fig. 9C, the silicone resin composition 403 adhered to the adherend 402 and the nut 404 was removed from the constant temperature oven 401, followed by measuring the adhesive strength by a push-pull gauge.

Referring to the measured values of the adhesive strength, the composition was rated as "good" when the adhesive strength was 0.7 MPa or more, and otherwise, rated as "bad". This is because according to the test results by the present inventors, when the adhesive strength is 0.7 MPa or more, the tank body 125 and the gasket 126 after the injection molding could be removed from the metal mold without causing separation of the gasket 126 from the tank body 125.

### (Evaluation of Moldability)

The evaluation of the moldability of the gasket was carried out through the visual observation mentioned above, When no burr of the gasket and no insufficient filling of the resin in an inner portion of the mold was observed during the molding of the gasket, sealing property was rated as "good", and otherwise, rated as "bad""

The obtained evaluation results are shown in the following Table 1.

**Table 1**

| Silicone resin composition | | Comparative Example | | Example | | |
|---|---|---|---|---|---|---|
| | | 1 | 2 | 1 | 2 | 3 |
| Component | Base resin (parts by weight) | 100 | 100 | 100 | 100 | 100 |
| | Crosslinking agent (parts by weight) | 1.5 | 1 5 | 2 | 3 | 4.5 |
| | Silica filler (parts by weight) | 40 | 40 | 40 | 40 | 40 |
| | Adhesion aid (parts by weight) | 0.75 | 2 | 0.75 | 0.75 | 0.75 |
| | Platinum catalyst (parts by weight) | 0.3 | 0 3 | 0 3 | 0.3 | 0.3 |
| | Mw of base resin | 70,000 | 70,000 | 70,000 | 70,000 | 70,000 |
| Evaluation results | Sealing property | bad | bad | good | good | good |
| | Adhesiveness | bad | good | good | good | good |
| | Moldability | Good | good | good | good | good |

As seen from Table 1, since Examples 1 and 2 and Comparative Example 1 did not generate a burr in the gasket during molding and insufficient filling of the resin in the molding, the moldability was deemed to be good. Contrary to this, in Comparative Example 1, both the sealing property and the adhesiveness were bad. Further in Comparative Example 2 in which, the amount of the silane coupling agent was larger than that in Comparative example 1, the adhesiveness could be improved as compared with Comparative Example 1, but the sealing property could not be enhanced.

On the other hand, in Examples 1 to 3 in which the first and second crosslinking agents were contained in an amount of 2 to 4.5 parts by weight in total per 100 parts by weight of the base resin, i.e., with respect to the amounts of the components in Comparative Example 1, the amount of not the silane coupling agent but the crosslinking agent was increased, both the adhesiveness and the sealing property could be enhanced as compared with Comparative Example 1. These results show that in Examples 1 to 3, as the adhesive strength of 0.7 MPa or more is more successfully achieved, the second crosslinking agent (surplus of the crosslinking agent) is present in a larger amount in the gasket.

### Examples 4 to 8 and Comparative Examples 3 to 7

These examples were carried out in accordance with the manner described above in Example 1, except that the composition of each of the silicone resin compositions was changed as shown in Tables 2 and 3 below.. The base resin used in these examples is the commercially available product having the described molecular weight (Mw) similar to that used in Example 2, and other components are identical with those used in Example 2.

After production of the gasket, the sealing property of the gasket, the adhesiveness of the silicone resin composition, and the moldability of the gasket were evaluated as in Example 1.

The obtained evaluation results are shown in the following Tables 2 and 3.

**Table 2**

| Silicone resin composition | | Comparative Example | Example | | |
|---|---|---|---|---|---|
| | | 3 | 4 | 5 | 6 |
| Component | Base resin (parts by weight) | 100 | 100 | 100 | 100 |
| | Crosslinking agent (parts by weight) | 3 | 3 | 3 | 3 |
| | Silica filler (parts by weight) | 20 | 35 | 30 | 25 |
| | Adhesion aid (parts by weight) | 0 75 | 0 75 | 0.75 | 0.75 |
| | Platinum catalyst (parts by weight) | 0 3 | 0.3 | 0.3 | 0.3 |
| | Mw of base resin | 150,000 | 90,000 | 90,000 | 90,000 |
| Evaluation results | Sealing property | bad | good | excellent | excellent |
| | Adhesiveness | bad | good | good | good |
| | Moldability | bad | good | good | good |

As seen from Table 2, Examples 4 to 6 and Comparative Example 3 show that a content of the silica filler in the silicon resin compositions in these examples were reduced in comparison with that in Example 2 described above, and at the same time, a molecular weight (Mw) of the base resin was increased in comparison with that of the base resin of Example 2.

Comparing each of Examples 4 to 6 to Comparative Example 1 mentioned above, it is shown that an improvement in both of the adhesiveness and the sealing property could be attained in Examples 4 to 6. Further, a good moldability of the gasket could be attained in Examples 4 to 6. In these examples, no burr in the gasket and no insufficient filling of the gasket-forming resin in the mold were generated during the molding process.

However, as is described in Examples 4 to 6 in which different contents of the silica filler were applied to the silicon resin composition, a sealing property of the gasket could be controlled through control of the content of the silica filler. The sealing property of Example 4 containing 35 parts by weight of the silica filler is comparable to that of the prior art gaskets, but the sealing property could be improved compared to that of the prior art gaskets, when the content of the silica filler was reduced as in Examples 5 and 6, i.e., 30 and 25 parts by weight, respectively.

Contrary to this, in Comparative Example 3 in which the silica filler is contained in an amount of 20 parts by weight, a burr was formed in the gasket during molding due to excessively reduced amount of the silica filler. Further, due to the reduction in the strength of the gasket material, both of the sealing property and the adhesiveness were deteriorated in the gasket.

**Table 3**

| Silicone resin composition | | Example | | Comparative Example | | | |
|---|---|---|---|---|---|---|---|
| | | 7 | 8 | 4 | 5 | 6 | 7 |
| Component | Base resin (parts by weight) | 100 | 100 | 100 | 100 | 100 | 100 |
| | Crosslinking agent (parts by weight) | 3 | 3 | 3 | 3 | 3 | 3 |
| | Silica filler (parts by weight) | 30 | 25 | 30 | 30 | 25 | 25 |
| | Adhesion aid (parts by weight) | 0 75 | 0 75 | 0.75 | 0.75 | 0.75 | 0.75 |
| | Platinum catalyst (parts by weight) | 0.3 | 0.3 | 0 3 | 0.3 | 0 3 | 0 3 |
| | Mw of base resin | 150,000 | 150,000 | 80,000 | 160,000 | 80,000 | 160,000 |
| Evaluation results | Sealing property | excellent | excellent | excellent | good | good | excellent |
| | Adhesiveness | good | good | good | good | good | good |
| | Moldability | good | good | bad | bad | bad | bad |

As seen from Table 3, Examples 7 and Comparative Examples 4 and 5 show that the molecular weight (Mw) of the base resin in each of these examples is different from that of the base resin in Example 5 described above. In this connection, it should be noted that other components and their contents in the silicone resin composition in Example 7 and Comparative Examples 4 and 5 are identical with those in the silicone resin composition in Example 5.

Similarly, Example 8 and Comparative Examples 6 and 7 show that the molecular weight (Mw) of the base resin in each of these examples is different from that of the base resin in Example 6 described above. In this connection, it should be noted that other components and their contents in the silicone resin composition in Example 8 and Comparative Examples 6 and 7 are identical with those in the silicone resin composition in Example 6.

Referring again to Table 3, it is shown that when the molecular weight (Mw) of the base resin is 150,000 as in Examples 7 and 8, a better adhesiveness and moldability as well as an increased sealing property of the gasket in comparison with those of the prior art gaskets could be obtained in these examples as in Examples 5 and 6 mentioned above.

Contrary to this, when the molecular weight (Mw) of the base resin was lowered to 80,000 as in Comparative Examples 4 and 6, a deterionation of the moldability was observed, since a burr was formed in the gasket during molding. Further, when the molecular weight (Mw) of the base resin was increased to 160,000 as in Comparative Example 5 and 7, a deterionation of the moldability was observed in the molding process of the gasket, since the molding of the gasket was shorted or stopped due to insufficient filling of the gasket-forming resin in the mold.

Therefore based on the above results the silica filler is preferably contained in an amount of 25 to 30 parts by weight in the silicone resin compositions, and the molecular weight (Mw) of the base resin is preferably in the range of 90,000 to 150,000.

### Examples 9 to 12

These examples were carried out in accordance with the manner described above in Example 1, except that the composition of each of the silicone resin compositions were changed as shown in Table 4 below. The base resin used in these examples is the commercially available product having a molecular weight (Mw) of 90,000 similar to that used in Example 1, and other components are identical with those used in Example 1, except for the content of each of the crosslinking agent and the silica filler was changed as is shown in Table 4.

After production of the gaskets, the sealing property of the gasket, the adhesiveness of the silicone resin composition, and the moldability of the gasket were evaluated as in Example 1.

The obtained evaluation results are shown in the following Table 4.

**Table 4**

| Silicone resin composition | | Example | | | |
|---|---|---|---|---|---|
| | | 9 | 10 | 11 | 12 |
| Component | Base resin (parts by weight) | 100 | 100 | 100 | 100 |
| | Crosslinking agent (parts by weight) | 2 | 2 | 4.5 | 4.5 |
| | Silica filler (parts by weight) | 30 | 25 | 30 | 25 |
| | Adhesion aid (parts by weight) | 0.75 | 075 | 0.75 | 0.75 |
| | Platinum catalyst (parts by weight) | 0.3 | 0 3 | 0.3 | 0.3 |
| | Mw of base resin | 90,000 | 90,000 | 90,000 | 90,000 |
| Evaluation results | Sealing property | excellent | excellent | excellent | excellent |
| | Adhesiveness | good | good | good | good |
| | Moldability | good | good | good | good |

As seen from Table 4, the composition of each of the silicone resin compositions in Examples 9 to 12 is identical with that of the silicone resin compositions in Examples 5 and 6, except that a content of the crosslinking agent was changed from 3 parts by weight to 2 or 4.5 parts by weight. However, as is summarized in Table 4, similar results comparable to the results of Examples 5 and 6 could be obtained in these examples. From these results, it is noted that the content of the crosslinking agent in the silicone resin composition is preferably in the range of 2 to 4.5 parts by weight per 100 parts by weight of the base resin, and also the content of the silica filler in the silicone resin composition is preferably in the range of 25 to 30 parts by weight per 100 parts by weight of the base resin.

## Claims

1. A gasket material for use in the formation of a gasket in a heat exchanger, the gasket being adhered to a resin-made tank of the heat exchanger, wherein
the gasket material is composed of a liquid silicone resin composition comprising a base resin, a first crosslinking agent for causing a crosslinking reaction of said base resin, a silane coupling agent, a second crosslinking agent for forming a bond to said silane coupling agent, and a silica filler.

2. The gasket material as claimed in claim 1, wherein said silicone resin composition comprises from 2 to 4.5 parts by weight in total of the first and second crosslinking agents per 100 parts by weight of the base resin.

3. The gasket material as claimed in claim 1 or 2, wherein said base resin has a weight average molecular weight (Mw) in the range of 90,000 to 150,000, and said silica filler is contained in said silicone resin composition in an amount of from 25 to 30 parts by weight per 100 parts by weight of the base resin.

4. A heat exchanger comprising:
a plurality of tubes (111) for allowing a fluid flow therein, and
a header tank (120) provided on both longitudinal end sides of said tube (111), the header tank (120) being extended in the direction orthogonal to the longitudinal direction of said tube (111), and being communicated with said plurality of tubes (111), wherein
said header tank (120) comprises a core plate (123) having joined thereto said plurality of tubes (111) and a resin-made tank body (125) constituting a tank interior space (124) together with said core plate (123), said tank body (125) and said core plate (123) being connected and sealed with a gasket (126) adhered to said tank body (125), and
said gasket (126) is an injection-molding product formed from the gasket material according to claim 1 or 2, injection-molding being carried out by injecting the gasket material in a site of forming said gasket in a mold.

5. The heat exchanger as claimed in claim 4, wherein said tank body (125) is formed by using polyamide 610 as said resin and the adhesion strength between said gasket (126) and said tank body (125) is 0.7 MPa or more.

6. A gasket material for use in the formation of a gasket in a heat exchanger, the gasket being adhered to a resin-made tank of the heat exchanger, wherein
the gasket material is composed of a liquid silicone resin composition comprising a base resin having a weight average molecular weight (Mw) in the range of 90,000 to 150,000, a crosslinking agent for causing a crosslinking reaction of said base resin, a silane coupling agent, and a silica filler, and
said silicone resin composition comprises from 25 to 30 parts by weight per 100 parts by weight of the base resin.

7. A heat exchanger comprising a resin-made tank body (125) having adhered thereto a gasket (126) formed from the gasket material according to claim 6.
